# EUROPÄISCHE PATENTANMELDUNG

(11) **EP 2 636 911 A1**
(43) Veröffentlichungstag der Anmeldung: **11.09.2013**
(21) Anmeldenummer: 13157352.9
(22) Anmeldetag: 01.03.2013
(51) Int. Cl.: F16B 5/00, F16B 19/02, F16B 35/04, F16B 41/00

(54) **Befestigungsanordnung**

(30) Priorität: 06.03.2012 DE 102012203520
(71) Anmelder: MAHLE International GmbH, 70376 Stuttgart (DE)
(72) Erfinder: Münzner, Jörg, 98527 Suhl (DE)
(74) Vertreter: BRP Renaud & Partner

(57) **Zusammenfassung**

Die Erfindung betrifft eine Befestigungsanordnung (1) zur Befestigung zweier Bauteile (2,3) aneinander, wobei
- das erste Bauteil (2) eine Durchgangsöffnung (6) mit einem ersten Durchmesser (d₁) zur Aufnahme der Schraube (4) aufweist,
- das zweite Bauteil (3) eine Einschrauböffnung (7) mit einem zum Außengewinde (8) der Schraube (4) komplementären Innengewinde (9) aufweist,
- die Einschrauböffnung (7) in einem Anfangsbereich (10) denselben Durchmesser (d₁) aufweist, wie die Durchgangsöffnung (6) des ersten Bauteils (2),
- eine Hülse (5) vorgesehen ist, deren Länge (L) größer ist als die Tiefe (T) der Durchgangsöffnung (6) im ersten Bauteil (2) und deren Außendurchmesser (d₂) im Wesentlichen dem Durchmesser (d₁) der Durchgangsöffnung (6) und dem Anfangsbereich (10) der Einschrauböffnung (7) entspricht,
- die Hülse (5) bei montierter Befestigungsanordnung (1) die Durchgangsöffnung (6) durchgreift und in den Anfangsbereich (10) der Einschrauböffnung (7) eingreift und dadurch das erste Bauteil (2) relativ zum zweiten Bauteil (3) ausrichtet.

## Beschreibung

Die vorliegende Erfindung betrifft eine Befestigungsanordnung zur Befestigung eines ersten Bauteils an einem zweiten Bauteil mit zumindest einer Schraube. Die Erfindung betrifft außerdem die Verwendung einer derartigen Befestigungsanordnung zum Fixieren einer Pumpe an einem Motor in einem Kraftfahrzeug.

Aus der WO 2004/099632 A1 ist eine Befestigungsanordnung aus einem Kunststoffteil mit einem metallischen Einsatz mit unverlierbar darin gehaltener Schraube bekannt, bei der der metallische Einsatz in ein Befestigungsloch des Kunststoffteils einsetzbar ist, um beim Verschrauben des Kunststoffteils mit einem anderen Bauteil auf das Kunststoffteil übertragene Befestigungskräfte zu begrenzen. Das Durchgangsloch des metallischen Einsatzes hat dabei einen ovalen Querschnitt, dessen größte diametrale Abmessung in Längsrichtung des Kunststoffteils liegt, um Toleranzen in Längsrichtung ausgleichen zu können.

Aus der DE 10 2008 014 389 A1 ist eine Befestigungsanordnung bekannt, umfassend eine Schraube, ein Zwischenelement und ein Fixiermittel zum unverlierbaren Fixieren der Montageanordnung an einem mit der Schraube festzuschraubenden Montageteil. Die Schraube ist dabei verliersicher am Montageteil gehalten, wobei die Montagefreiheit der Schraube zwischen einer als Zwischenelement fungierenden elastischen Manschette und dem Fixiermittel selbst realisiert wird. Hierzu ist zwischen dem Fixiermittel und der Manschette eine Spielpassung vorgesehen, welche die Montagefreiheit gewährleistet. Die Verliersicherung beruht auf einer Übermaßpassung zwischen Gewindeabschnitt der Schraube und Manschette und ermöglicht ein Entfernen der Schraube aus dem Fixiermittel unter einem erhöhten Kraftaufwand, der im Rahmen der gewöhnlichen Zuführung und Lagerung des Montageteils nicht erreicht wird.

Aus der EP 2 048 384 A2 ist ebenfalls eine Befestigungsanordnung bzw. eine Montageanordnung bekannt, umfassend eine in einem Montageteil einsetzbare Hülse, einen elastischen Ring und eine einen Kopf und einen Schaft aufweisende Schraube, die mit ihrem Schaft bis zum Aufliegen der Auflagefläche des Kopfes in die Hülse einführbar ist. Der Schaft der Schraube ist dabei mit mindestens einem Gewinde und mit mindestens einer Ringnut versehen, in die der Ring einsetzbar ist und wobei der Außendurchmesser des in die Ringnut eingesetzten Rings sowohl den Schaftdurchmesser der Schraube überschreitet, als auch den Kopfdurchmesser der Schraube unterschreitet. Durch die bekannte Montageanordnung soll im vormontierten Zustand eine axiale Beweglichkeit der Schraube relativ zur Hülse ausgeschlossen, ein Toleranzausgleich im Sinne einer Winkelabweichung zwischen Schrauben- und Hülsenachse jedoch zugelassen werden.

Lohnkosten stellen bei der Montage von Kraftfahrzeugen mit einen der höchsten Kostenfaktoren dar, so dass in diesem Bereich versucht wird, die Montage durch Vorfertigen einzelner Komponenten bzw. Baugruppen möglichst einfach und dadurch kostengünstig gestalten zu können. Insbesondere bei Kraftfahrzeugen kommen in der Montage jedoch noch vergleichsweise häufig Schraubverbindungen vor, die vom jeweiligen Werker fixiert werden müssen, wobei zunächst ein Ausrichten der einzelnen über die Schraubverbindung miteinander zu befestigenden Bauteile erforderlich ist. Zum Befestigen zweier Bauteile muss somit der Werker zunächst die beiden Bauteile zueinander ausrichten, um dann anschließend die Befestigungsschrauben eindrehen zu können. Sowohl das Ausrichten als auch der eigentliche Schraubvorgang benötigen dabei eine nicht unerhebliche Zeitspanne.

Die vorliegende Erfindung beschäftigt sich daher mit dem Problem, eine verbesserte Befestigungsanordnung zur Befestigung eines ersten Bauteils an einem zweiten Bauteil mittels einer Schraube anzugeben, die sich insbesondere durch eine einfache und trotzdem exakte Montage auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, eine von einem Werker an einem Fertigungsband zu fixierende Schraubverbindung (Befestigungsanordnung) so weit vorzufertigen, dass die hierfür bisher erforderlichen und aufwändigen Ausrichtvorgänge entfallen können. Hierzu weist ein erstes Bauteil der Befestigungsanordnung eine Durchgangsöffnung mit einem ersten Durchmesser zur Aufnahme der Schraube auf. Das zweite Bauteil der Befestigungsanordnung besitzt eine Einschrauböffnung mit einem zum Außengewinde der Schraube komplementären Innengewinde, wobei die Einschrauböffnung zugleich in einem Anfangsbereich denselben Durchmesser aufweist wie die Durchgangsöffnung des ersten Bauteils und wobei der Durchmesser der Einschrauböffnung im Anfangsbereich des zweiten Bauteils größer ist als ein Innendurchmesser des Innengewindes im zweiten Bauteil. Weiterer Bestandteil der erfindungsgemäßen Befestigungsanordnung ist eine Hülse, deren Länge größer ist als die Tiefe der Durchgangsöffnung im ersten Bauteil und deren Außendurchmesser im Wesentlichen dem Innendurchmesser der Durchgangsöffnung in dem Anfangsbereich der Einschrauböffnung entspricht. Bei in die Durchgangsöffnung eingesetzter Hülse überragt diese somit die Durchgangsöffnung in Richtung der Einschrauböffnung des zweiten Bauteils und greift bei montierter Befestigungsanordnung in den Anfangsbereich der Einschrauböffnung am zweiten Bauteil ein, wodurch das erste Bauteil vergleichsweise einfach relativ zum zweiten Bauteil ausgerichtet und anschließend die Schraube in das Innengewinde am zweiten Bauteil eingeschraubt werden kann. Vorzugsweise erfüllt dabei die erfindungsgemäße Hülse jedoch nicht nur eine Zentrierfunktion, sondern zusätzlich auch die Funktion einer Verliersicherung der Schraube, so dass das erste Bauteil mit vormontierter Hülse und sich darin befindlicher Schraube am Fertigungsband angeliefert werden kann. Der Werker muss somit nur noch das erste Bauteil derart am zweiten Bauteil anordnen, dass der axial über die Durchgangsöffnung am ersten Bauteil überstehende Bereich der Hülse in den Anfangsbereich der Einschrauböffnung am zweiten Bauteil eingreift, wobei bei zumindest zwei derartigen Befestigungsanordnungen bereits eine eindeutige Lageausrichtung des ersten Bauteils relativ zum zweiten Bauteil erreicht wird.

Die Einschrauböffnung des zweiten Bauteils ist vorzugsweise im zweiten Bauteil ausgebildet. Das heißt also insbesondere, dass die Einschrauböffnung keine separate Komponente des zweiten Bauteils ist.

Bevorzugt ist die Einschrauböffnung als eine Ausnehmung im zweiten Bauteil ausgebildet. Dies kann dadurch realisiert sein, dass die Einschrauböffnung in das zweite Bauteil eingearbeitet ist. Hierzu können Spanverfahren, wie beispielsweise Fräsen, Bohren, Drehen und dergleichen oder eine Kombination daraus, eingesetzt werden. Ebenso kann die Einschrauböffnung mit Hilfe von beliebigen anderen formgebenden Verfahren eingearbeitet sein.

Entsprechendes gilt für die Durchgangsöffnung, die vorzugsweise im ersten Bauteil ausgebildet ist, wobei Ausgestaltungen bevorzugt sind, bei denen die Durchgangsöffnung als eine Bohrung im ersten Bauteil ausgebildet ist.

Die Hülse ist bei bevorzugten Ausführungsformen schulterlos ausgebildet. Hierdurch ist die Schulter also in der Durchgangsöffnung und/oder der Einschrauböffnung angeordnet und weist insbesondere keine Auflage auf dem ersten Bauteil und/oder dem zweiten Bauteil auf.

Zweckmäßig weist die Hülse einen Axialschlitz auf. Ein derartiger Axialschlitz erlaubt ein Einpressen der Hülse in die Durchgangsöffnung des ersten Bauteils unter Verringerung des Durchmessers der Hülse, beispielsweise durch ein einfaches Zusammendrücken derselben. Ist die Hülse in die Durchgangsöffnung am ersten Bauteil eingepresst, so kann sie sich zurück verformen und legt sich dadurch federnd an eine Innenwandung der Durchgangsöffnung des ersten Bauteils an. Die Hülse kann sich somit insbesondere durch ein einfaches Verformen einer mechanisch bearbeiteten Durchgangsöffnung (Bohrung) anpassen. Die mechanische Bearbeitung bzw. Herstellung der Durchgangsöffnung kann dabei mit äußerst enger Toleranz kostengünstig hergestellt werden, wobei diese enge Toleranz von der Hülse übernommen wird.

Bei einer weiteren vorteilhaften Ausführungsform der erfindungsgemäßen Lösung weist die Hülse an zumindest einer Stirnseite eine Fase, insbesondere eine Einführfase, auf. Eine derartige Einführfase schützt die Hülse beim Fixieren der Befestigungsanordnung vor eventuellen Beschädigungen ebenso wie beim Einpressen der Hülse in die Durchgangsöffnung des ersten Bauteils. Eine derartige Einführfase erleichtert zudem die Montage des ersten Bauteils am zweiten Bauteil, da kein passgenaues Aufeinandersetzen erforderlich ist, sondern die Fase der Hülse eine selbstzentrierende Wirkung entfaltet.

Bei einer weiteren vorteilhaften Ausführungsform der erfindungsgemäßen Lösung weist die Hülse einen ringförmigen, nach innen gerichteten Wulst zur Zentrierung der Schraube und als Verliersicherung für dieselbe auf. In ähnlicher Weise besitzt die Schraube einen ideal nach außen ragenden Ringkragen, dessen Außendurchmesser größer ist als der Innendurchmesser des nach innen gerichteten Wulstes der Hülse, so dass die Schraube verliersicher in der Hülse fixiert ist. Der Ringkragen an der Schraube einerseits und ein Schraubenkopf mit einer entsprechenden Anlagefläche bestimmen somit als jeweilige Anschläge die axiale Verstellbarkeit der Schraube relativ zur Durchgangsöffnung bzw. relativ zur Hülse. Neben der eigentlichen Verliersicherung besitzt der nach innen gerichtete Wulst zugleich eine Zentrierfunktion für die Schraube, da der Innendurchmesser des Wulstes im Wesentlichen dem Außendurchmesser der Schraube benachbart zum Ringkragen entspricht. Selbstverständlich können dabei auch mehrere Ringkragen vorgesehen sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch
- Fig. 1: eine teilweise geschnittene Ansicht auf eine erfindungsgemäße Befestigungsanordnung,
- Fig. 2: eine Ansicht auf eine Schraube mit einer erfindungsgemäßen Hülse,
- Fig. 3: eine Schnittdarstellung durch die Befestigungsanordnung,
- Fig. 4: unterschiedliche Schnittdarstellungen durch die Befestigungsanordnung.

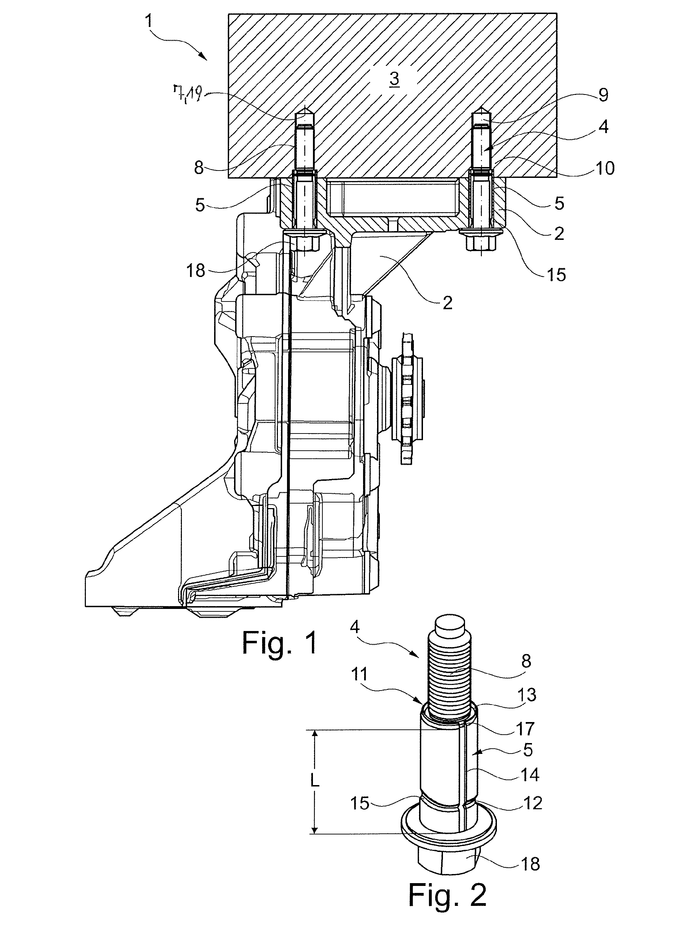

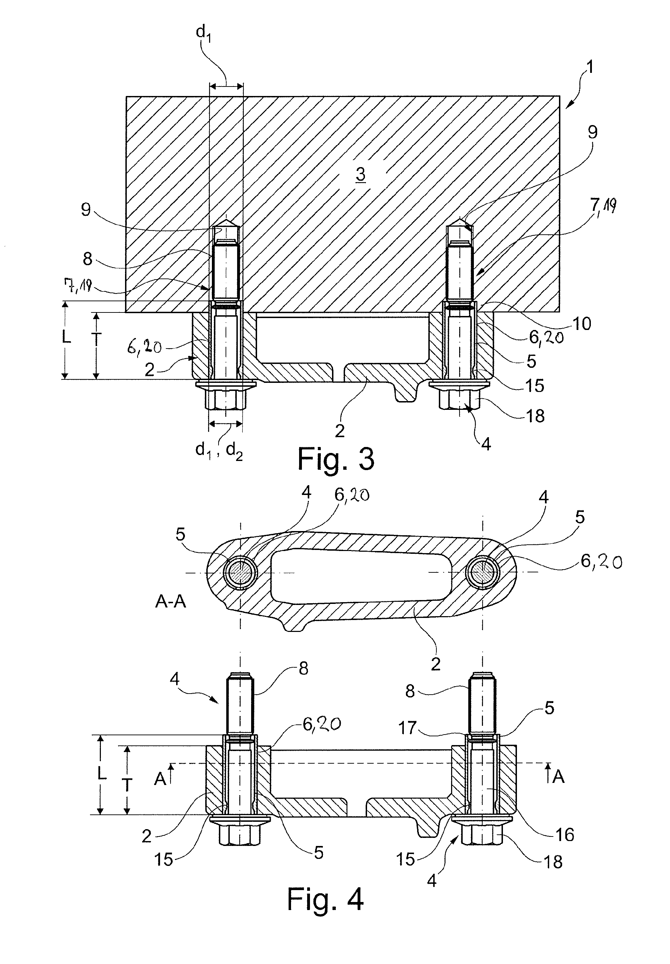

Entsprechend den Figuren 1 und 3, weist eine erfindungsgemäße Befestigungsanordnung 1 zur Befestigung eines ersten Bauteils 2 an einem zweiten Bauteil 3 zwei Schrauben 4 mit jeweils zwei Hülsen 5 auf. Die Hülse(n) 5 können aus Metall, insbesondere aus Stahl, oder aus Kunststoff ausgebildet sein. Das erste Bauteil 2 kann beispielsweise als Pumpe, insbesondere als Öl- oder als Wasserpumpe, ausgebildet sein, wobei das zweite Bauteil 3 beispielsweise als Motor in einem Kraftfahrzeug ausgebildet sein kann.

Betrachtet man insbesondere die Figuren 1 sowie 3 und 4, so kann man erkennen, dass das erste Bauteil 2 eine Durchgangsöffnung 6 mit einem ersten Durchmesser d₁ zur Aufnahme der Schraube 4 besitzt. Das zweite Bauteil 3, hier also der Motor, besitzt zwei Einschrauböffnungen 7 mit jeweils einem zu einem Außengewinde 8 der Schraube 4 komplementären Innengewinde 9. Die jeweilige Einschrauböffnung 7 ist als eine Ausnehmung 19 im zweiten Bauteil 3 ausgebildet, während die jeweilige Durchgangsöffnung 6 als Bohrung 20 im ersten Bauteil 2 ausgebildet ist. Zusätzlich weisen die Einschrauböffnungen 7 in einem jeweiligen Anfangsbereich 10 denselben Durchmesser d₁ auf, wie die Durchgangsöffnungen 6 des ersten Bauteils 2. Zur erfindungsgemäßen Befestigungsanordnung 1 gehört auch noch die bereits zuvor erwähnte zumindest eine Hülse 5, deren Länge L (vgl. Figur 2 und 3) größer ist als die zugehörige Tiefe T der Durchgangsöffnung 6, respektive der Durchgangsöffnungen 6, im ersten Bauteil 2 und deren Außendurchmesser d₂ im Wesentlichen dem Durchmesser d₁ der Durchgangsöffnung(en) 6 und dem Durchmesser d₁ des Anfangsbereichs 10 der Einschrauböffnung 7 entspricht. Generell sind in den gezeigten Ausführungsformen je Befestigungsanordnung 1 jeweils zwei Durchgangsöffnungen 6, Hülsen 5, Schrauben 4 und Einschrauböffnungen 7 vorgesehen, wobei selbstverständlich auch eine Befestigungsanordnung 1 mit jeweils zumindest einer Einschrauböffnung 7, einer Hülse 10, einer Schraube 4 und einer Durchgangsöffnung 6 ausreichend ist. Die Hülse 5 durchgreift bei montierter Befestigungsanordnung 1 die Durchgangsöffnung 6 koaxial und greift in den Anfangsbereich 10 der korrespondierenden Einschrauböffnung 7 ein, wodurch das erste Bauteil 2, hier also die Öl- oder Wasserpumpe, relativ zum zweiten Bauteil 3, hier also dem Motor, ausgerichtet werden kann. Dabei ist die Hülse 5 schulterlos ausgebildet, wodurch sie weder auf/an dem ersten Bauteil 2 noch am zweiten Bauteil 3 aufliegt.

Die Hülse 5 besitzt einen Axialschlitz 12 (vgl. Fig. 2), der ein Zusammendrücken der Hülse 5 und damit ein einfaches Einsetzen derselben in die zugehörige Durchgangsöffnung 6 des ersten Bauteils 2 ermöglicht. An zumindest einer Stirnseite 11 der Hülse 5 ist zusätzlich eine Fase, insbesondere eine Einführfase 13, vorgesehen, welche ein Einführen der Hülse 5 sowohl in die Durchgangsöffnung 6 des ersten Bauteils 2 als auch bei Montieren der Befestigungsanordnung 1 ein Einführen der Hülse 5 in den Anfangsbereich 10 der zugehörigen Einschrauböffnung 7 vereinfacht und dadurch die Montage der Befestigungsanordnung 1 erleichtert. Ebenfalls optional kann vorgesehen sein, dass die Ränder 14 des Axialschlitzes 12 der Hülse 5 gerundet ausgebildet sind, was ebenfalls das Risiko einer Beschädigung der Hülse 5 bei deren Montage verringert.

Betrachtet man die Figuren 1 bis 4, so kann man an den jeweiligen Hülsen 5 einen ringförmigen, nach innen gerichteten Wulst 15 zur Zentrierung der Schraube 4 und zugleich als Verliersicherung für dieselbe erkennen. Betrachtet man den Ringwulst 15 genauer, so kann man erkennen, dass dieser den Innendurchmesser der Hülse 5 verringert und im Wesentlichen komplementär zu einem Außendurchmesser der Schraube 4 im Schaftbereich 16 entspricht, wodurch die Führungsfunktion für die Schraube 4 gegeben ist. Die Schraube 4 kann darüber hinaus einen Ringkragen 17 aufweisen, dessen Außendurchmesser größer ist als der Innendurchmesser des nach innen gerichteten Wulstes 15 der Hülse 5, wodurch ein unbeabsichtigtes Herausfallen der Schraube 4 aus der in die Durchgangsöffnung 6 des ersten Bauteils 2 eingesetzten Hülse 5 verhindert wird. Zur anderen Seite kann die Schraube 4 aufgrund eines Schraubenkopfes 18 nicht herausfallen, da dieser einen größeren Durchmesser aufweist als der Innendurchmesser d₁ (erster Durchmesser) der Durchgangsöffnung 6. Am Schraubenkopf 18 kann darüber hinaus eine Angriffskontur, beispielsweise ein Sechskant, angeordnet sein, welcher ein Eindrehen der Schraube 4 in die Einschrauböffnung 7 am zweiten Bauteil 3 mittels eines entsprechenden Werkzeugs ermöglicht.

Eine Fixierung der Hülse 5 in der Durchgangsöffnung 6 des ersten Bauteils 2 kann neben einer Federvorspannung durch ein vorheriges Zusammendrücken der Hülse 11 auch mittels eines axialen Stauchens derselben erzielt werden. Vorzugsweise besitzt die Hülse 5 darüber hinaus eine Fertigungstoleranz von zumindest H6, vorzugsweise sogar von H7 oder H8, wodurch eine äußerst hohe Fertigungsqualität erzielt werden kann. Derzeitig verfügbare Hülsen liegen weit über derartigen Toleranzbereichen. Um diese Toleranz zu ermöglichen, wird die Hülse 5 mit dem zuvor erwähnten Axialschlitz 12 ausgeführt. Die Hülse 5 kann sich dadurch verformen und der mechanisch bearbeitenden Durchgangsöffnung 6 im ersten Bauteil 2 anpasst. Die mechanische Bearbeitung der Durchgangsöffnung 6 kann dabei mit sehr enger Toleranz kostengünstig hergestellt werden, wobei diese Toleranz dann von der Hülse 5 übernommen wird. Generell kann ein axialer Überstand der Hülse 5 über das erste Bauteil 2, das heißt eine Differenz zwischen der Länge L der Hülse 5 und der Tiefe T der Durchgangsöffnung 6 beliebig ausgeführt sein, wobei der Überstand selbstverständlich lediglich so groß sein darf, dass dieser im Aufnahmebereich 10 der Einschrauböffnung 7 noch aufgenommen werden kann.

Mit der erfindungsgemäßen Befestigungsanordnung 1 lässt sich eine Schraub-Hülsen-Kombination herstellen, mittels der die Montage der Befestigungsanordnung 1 und damit auch die Montage des ersten Bauteils 2 am zweiten Bauteil 3 deutlich vereinfacht und damit deutlich schneller und kostengünstiger ausgeführt werden kann. Durch die erfindungsgemäße Hülse 5 kann darüber hinaus ein besonders exaktes und zugleich einfaches Ausrichten des ersten Bauteils 2 relativ zum zweiten Bauteil 3 erzielt werden, wodurch die Montagequalität gesteigert werden kann.

## Patentansprüche

1. Befestigungsanordnung (1) zur Befestigung eines ersten Bauteils (2) an einem zweiten Bauteil (3) mit zumindest einer Schraube (4), wobei
- das erste Bauteil (2) eine Durchgangsöffnung (6) mit einem ersten Durchmesser (d₁) zur Aufnahme der Schraube (4) aufweist,
- das zweite Bauteil (3) eine Einschrauböffnung (7) mit einem zum Außengewinde (8) der Schraube (4) komplementären Innengewinde (9) aufweist,
- die Einschrauböffnung (7) in einem Anfangsbereich (10) denselben Durchmesser (d₁) aufweist, wie die Durchgangsöffnung (6) des ersten Bauteils (2),
- eine Hülse (5) vorgesehen ist, deren Länge (L) größer ist als die Tiefe (T) der Durchgangsöffnung (6) im ersten Bauteil (2) und deren Außendurchmesser (d₂) im Wesentlichen dem Durchmesser (d₁) der Durchgangsöffnung (6) und dem Anfangsbereich (10) der Einschrauböffnung (7) entspricht,
- die Hülse (5) bei montierter Befestigungsanordnung (1) die Durchgangsöffnung (6) durchgreift und in den Anfangsbereich (10) der Einschrauböffnung (7) eingreift und dadurch das erste Bauteil (2) relativ zum zweiten Bauteil (3) ausrichtet.

2. Befestigungsanordnung nach Anspruch 1,
**dadurch gekennzeichnet,**
**dass** die Hülse (5) einen Axialschlitz (12) aufweist.

3. Befestigungsanordnung nach Anspruch 1 oder 2,
**dadurch gekennzeichnet,**
**dass** die Hülse (5) an zumindest einer Stirnseite (11) eine Fase, insbesondere eine Einführfase (13), aufweist.

4. Befestigungsanordnung nach einem der Ansprüche 2 oder 3,
**dadurch gekennzeichnet,**
**dass** Ränder (14) des Axialschlitzes (12) gerundet sind.

5. Befestigungsanordnung nach einem der Ansprüche 1 bis 4,
**dadurch gekennzeichnet,**
**dass** die Hülse (5) einen ringförmigen, nach innen gerichteten Wulst (15) zur Zentrierung der Schraube (4) und als Verliersicherung für dieselbe aufweist.

6. Befestigungsanordnung nach Anspruch 5,
**dadurch gekennzeichnet,**
**dass** die Schraube (4) einen Ringkragen (17) aufweist, dessen Außendurchmesser größer ist als der Innendurchmesser des nach innen gerichteten Wulstes (15) der Hülse (5).

7. Befestigungsanordnung nach einem der Ansprüche 1 bis 6,
**dadurch gekennzeichnet,**
**dass** das erste Bauteil (2) eine Pumpe, insbesondere eine Öl- oder Wasserpumpe, und das zweite Bauteil (3) ein Motor eines Kraftfahrzeugs ist.

8. Befestigungsanordnung nach einem der Ansprüche 1 bis 7,
**dadurch gekennzeichnet,**
**dass** die Hülse (5) mittels axialer Stauchung in der Durchgangsöffnung (6) des ersten Bauteils (2) fixiert ist.

9. Befestigungsanordnung nach einem der Ansprüche 1 bis 8,
**dadurch gekennzeichnet,**
**dass** die Hülse (5) eine Fertigungstoleranz von zumindest H6, bevorzugt H7 oder H8, aufweist.

10. Befestigungsanordnung nach einem der Ansprüche 1 bis 9,
**dadurch gekennzeichnet,**
**dass** die Hülse (5) aus Metall, insbesondere aus Stahl, oder aus Kunststoff ausgebildet ist.

11. Befestigungsanordnung nach einem der Ansprüche 1 bis 10,
**dadurch gekennzeichnet,**
**dass** die Durchgangsöffnung (6) im ersten Bauteil (2) ausgebildet ist und/oder die Einschrauböffnung (7) im zweiten Bauteil (3) ausgebildet ist.

12. Befestigungsanordnung nach einem der Ansprüche 1 bis 11,
**dadurch gekennzeichnet,**
**dass** die Einschrauböffnung (7) als eine Ausnehmung (19) im zweiten Bauteil (3) ausgebildet ist.

13. Befestigungsanordnung nach einem der Ansprüche 1 bis 12,
**dadurch gekennzeichnet,**
**dass** die Hülse (5) schulterlos ausgebildet ist.

14. Verwendung einer Befestigungsanordnung (1) nach einem der Ansprüche 1 bis 13 zur Befestigung einer Pumpe an einem Motor in einem Kraftfahrzeug.
